Europäisches Patentamt

European Patent Office

Office européen des brevets

(19)

(11) Publication number: **0 080 246**
**B1**

(12) **EUROPEAN PATENT SPECIFICATION**

(45) Date of publication of patent specification: **10.04.85**

(21) Application number: **82201485.8**

(22) Date of filing: **22.11.82**

(51) Int. Cl.⁴: **C 09 D 11/10**, B 41 M 3/14, G 03 C 1/68

(54) Method for printing an image on a substrate using a thermoplastic printing ink based on BMA and including a photo-initiator, and prints manufactured accordingly.

(30) Priority: **23.11.81 NL 8105286**

(43) Date of publication of application:
**01.06.83 Bulletin 83/22**

(45) Publication of the grant of the patent:
**10.04.85 Bulletin 85/15**

(84) Designated Contracting States:
**CH DE FR GB LI NL**

(56) References cited:
**FR-A-2 263 252**
**FR-A-2 308 127**
**US-A-4 131 529**

(73) Proprietor: **Joh. Enschedé en Zonen Grafische Inrichting B.V.**
**P.O. Box 114 Klokhuisplein 5**
**NL-2000 AC Haarlem (NL)**

(72) Inventor: **Raterink, Hendrik Johan**
**Cederlaan 37**
**NL-2282 KC Rijswijk (NL)**
Inventor: **Van Renesse, Rudolf Leopold**
**Van Weede van Dijckveldstraat 51**
**NL-2582 KR 's-Gravenhage (NL)**

(74) Representative: **Vos, Jan Eling et al**
**OCTROOIBUREAU VRIESENDORP & GAADE**
**P.O. Box 266**
**NL-2501 AW The Hague (NL)**

EP 0 080 246 B1

Courier Press, Leamington Spa, England.

## Description

The invention relates to a process for printing an image on a carrier with a thermoplastic printing ink on the basis of butylmethacrylate (BMA) with as an additive a substance enabling photopolymerisation of the printing ink in situ.

Such a process is known from FR—A—2 263 252. The known process is concerned with decorating metal articles at high speed. It has been found that the known process is a first step in a process to apply a hall-mark photographically onto a paper carrier. After developing the photographically applied recording the said hall-mark should match good quality paper bonding with durability for a number of years.

According to the invention the process specified in the preamble is characterized in that the printing ink composition comprises per 10 ml butylmethacrylate (BMA) 2—4 ml ethylene glycol-di-methacrylate (EGDMA), 1.0—8.2 g N-vinylcarbazole (NVC) and 0.7—1.0 g benzoin methylether (BME) in order to apply a hall-mark photographically onto a paper carrier.

The monomers BMA and EGDMA are liquid and also serve as organic and hydrophobic solvents for the photoinitiator benzoin methylether (BME) and for the monomer NVC.

The said printing ink composition is sensitive as to ultraviolet radiation. The presence of the cross-linking monomer ethylene glycol-di-methacrylate affects the radiation sensitivity favourably, but in a relatively great concentration it may induce brittleness in the resulting polymer.

The refractive index of the exposed portion of the material differs from that of the unexposed portion sufficiently to obtain a stable diffraction grating by appropriate imagewise exposure and subsequent completion of the polymerisation process.

In addition the solubility in for example alcohol of the exposed portions as compared with the solubility of the unexposed portions is different. This difference can be put to use by superficially solving the unexposed portions which have been polymerized to a lesser extent, so that a grating can be produced in relief. The height of such a relief can amount to 10 µm for example.

The printing ink films as produced, thus lending themselves to a photographical recording of diffraction gratings, exhibit fair adherence to paper without adopting, however, the texture of the paper surface. The films remain scratchproof and keep bonded when strongly bending the paper substrate.

In particular the printing ink films can be used to apply holographic prints onto securities, thus providing same with hall-marks.

Examples I, II, III
Composition of the mixture of monomers with the prescriptions:

|            | I   | II  | III |
|------------|-----|-----|-----|
| BMA (ml)   | 5   | 5   | 5   |
| EGDMA (ml) | 5   | 1   | 2   |
| BME (g)    | 0.5 | 0.7 | 0.7 |

Examples IV, V, VI, VII, VIII, IX
Composition of the mixture of monomers with the prescriptions:

|            | IV  | V   | VI  | VII | VIII | IX  |
|------------|-----|-----|-----|-----|------|-----|
| BMA (ml)   | 5   | 5   | 5   | 5   | 5    | 6.5 |
| EGDMA (ml) | 1   | 2   | 2   | 2   | 2    | 2   |
| NVC (g)    | 1.5 | 0.5 | 1.5 | 2.5 | 3.5  | 5.5 |
| BME (g)    | 0.5 | 0.5 | 0.5 | 0.5 | 0.5  | 0.5 |

## Claims

1. Process for printing an image on a carrier with a thermoplastic printing ink on the basis of butylmethacrylate (BMA) with as an additive a substance enabling photopolymerisation of the printing ink in situ, characterized in that the printing ink composition comprises per 10 ml butylmethacrylate (BMA) 2—4 ml ethylene glycol-di-methacrylate (EGDMA), 1.0—8.2 g N-vinylcarbazole (NVC) and 0.7—1.0 g benzoin methylether (BME) in order to apply a hall-mark photographically onto a paper carrier.

2. Printed matter produced with a process according to claim 1.

**Patentansprüche**

1. Verfahren zum Aufdrucken eines Zeichens auf einen Träger mit einer thermoplastischen Drucktinte auf Basis von Butylmethacrylat (BMA) mit einem Material als Zusatz, welches die Photopolymerisation der Drucktinte in situ ermöglicht, dadurch gekennzeichnet, dass die Drucktintenzusammensetzung per 10 ml Butylmethacrylat (BMA) 2—4 Äthylenglykol-di-methacrylat (EGDMA), 1,0—8,2 g N-Vinylcarbazol (NVC) und 0,7—1,0 g Benzoinmethyläther (BME) enthält, zur photographischen Anordnung einer Echtheitsmarke auf einen Papierträger.

2. Druckwerk hergestellt mit einem Verfahren gemäss Anspruch 1.

**Revendications**

1. Procédé d'impression d'une image sur un support avec une encre d'impression thermoplastique à base de butylmétacrylate (BMA) comportant, comme additif, une substance permettant la photopolymérisation in-situ de l'encre d'impression, caractérisé en ce que l'encre d'impression contient pour 10 ml de butylmétacrylate (BMA) 2—4 ml d'éthyléneglycoldimétacrylate (EGDMA), 1,0—8,2 g de N-vinylcarbazole (NVC) et 0,7—1,0 g de benzoïne méthyléther (BME) afin d'appliquer de façon photographique un cachet sur un support papier.

2. Produit imprimé obtenu par un procédé selon la revendication 1.